# EUROPEAN PATENT APPLICATION

(11) **EP 2 430 924 A1**
(43) Date of publication of application: **21.03.2012**
(21) Application number: 10394018.5
(22) Date of filing: 15.09.2010
(51) Int. Cl.: A21D 2/36, A21D 8/08, A21D 13/02, A23L 1/01, A23L 1/164

(54) **A snack food product**

(71) Applicant: Largo Foods Intellectual Properties Limited, County Meath (IE)
(72) Inventor: Coyle, Raymond, Tara, County Meath (IE); Donnelly, John, Portmarnock, County Dublin (IE)
(74) Representative: O'Brien, John Augustine

(57) **Abstract**

A rice based snack chip product is formed from a sheeted, baked and fried rice dough. The snack chip product comprises from 2% to 3% by weight of particulate seeds and/or grains to prevent blistering, and an amount of from 1% to 2% by weight of sugars to brown the product. The dough may comprise pregelatinised rice flour, brown rice flour and masa corn flour in approximately equal quantities by weight. The seeds or grain may be selected from the group comprising quinoa, poppy seeds, pumpkin seeds and sesame seeds.

## Description

### Introduction

This invention relates to the manufacture of rice based snack chip products.

There are several difficulties involved in manufacturing rice based snack chip products on a large scale. One of the difficulties is to balance the organoleptic properties of the product while at the same time ensuring that the products do not blister during manufacture.

This invention is directed towards providing a rice based snack chip product and a method for manufacturing such a product which will address at least some of these issues.

### Statements of Invention

According to the invention there is provided a rice base snack chip product formed from a sheeted, baked and fried rice dough, the chip product comprising from 2% to 3% by weight of particulate seeds and/or grains to prevent blistering, and an amount of from 1% to 2% by weight of sugars to brown the product.

In one embodiment the dough comprises pregelatinised rice flour and brown rice flour. The dough may also include masa corn flour.

In one embodiment the dough comprises pregelatinised rice flour, brown rice flour and masa corn flour in approximately equal quantities by weight.

In one case the sugars comprise sucrose and dextrose. Preferably there are approximately 3 parts sucrose to one part dextrose by weight.

In one embodiment seeds or grain are selected from the group comprising quinoa, poppy seeds, pumpkin seeds and sesame seeds.

In one case the seeds comprise sesame seeds which are present in an amount of approximately 2.4% by weight of the chip product. The seeds may comprise black sesame seeds.

The invention also provides a process for manufacturing a rice based snack chip product comprising the steps of:-
mixing a dough comprising:-
   pregelatinised rice flour
   brown flour
   masa corn flour
   particulate grains or seeds
   sucrose
   dextrose
   oil and
   water
pre-sheeting the dough;
sheeting the dough;
cutting the sheeted dough into chip sized pieces;
cooking the dough pieces in an oven;
drying the dough pieces; and
frying the dough pieces.

The seeds may comprise sesame seeds which are present in an amount of approximately 2.4% by weight of the chip product. The seeds may be black sesame seeds.

The dough may comprise pregelatinised rice flour, brown rice flour and masa corn flour in approximately equal quantities by weight. The dough may comprise approximately 3 parts sucrose to one part dextrose by weight.

### Detailed Description

A rice based snack chip dough mixture is formed by mixing flour, seeds or grains. A typical recipe is given in the table below.

| Ingredient | % |
|---|---|
| Masa Corn Flour | 19.7 |
| Pregelatinised Rice Flour | 19.7 |
| Brown Rice Flour | 19.7 |
| Black Sesame Seeds | 2.4 |
| Dextrose | 0.4 |
| Sugar | 1.2 |
| Oil | 1.6 |
| Dimodan | 0.9 |
| Water | 34.6 |

The ratio of pre-gelatinised rice to brown rice is about 2:1.

The incorporation of particulate seeds such as sesame seeds allows the steam venting or docking of the dough during cooking and prevents blistering. Black sesame seeds in the finished product aid the visual appearance of the chips.

The dough mix is difficult to handle as it has rheological properties that make it very sticky. Moisture and wetting agents are used at low levels to reduce stickiness. Dimodan is used as an emulsifier to improve the rheological properties.

The texture of the product is quite soft compared to conventional tortilla chips and their numerous variations.

The flavour of the product is very desirable and not impacted by the use of high amounts of brown rice. It is quite different from traditional tortilla or rice chips.

Colour in the recipe is precisely controlled by blending granulated sugar (sucrose) and dextrose in precise amounts to achieve the desired level of browning. Each of the two types of sugar used has different browning, flavouring and texture contributing characteristics.

We pre-sheet using stainless steel rollers prior to final sheeting to optimise throughput and sheeting quality. The dough in this instance is sticky and difficult to handle. We have found that using stainless steel rollers to carry out an initial pre-sheeting kneading followed by final kneading using rollers in a final sheeter ensures that the dough is more easily and efficiently processed. Splitting the kneading between pre-sheeting and final sheeting balances mechanical energy input without adverse effects on product quality and throughput.

The dough is then rolled and sheeted. The sheets of dough are then cut into chip shapes using die cutter with triangular facings. The weight of 10 chips is taken to ensure a typical weight of 39 grams.

The chip pieces are baked in a drying oven. The oven has three separate stages using a wire oven belt. In the first stage the pieces are cooked at about 316°C for about 40 seconds. In a second stage the chip pieces are cooked at about 302°C for about 40 seconds. In a third stage the pieces are browned at about 232°C for about 40 seconds. Extraction fans are used in each section to remove the moisture from the product. Relatively low baking temperatures are used to dry the product (minimum 20°C, maximum 30°C). The dried chips have a moisture content of about 17%

Following baking, the chips are deep fried in sunflower oil at a temperature of about 177°C for about 50 seconds.

Flavour is applied in a rotating drum using the aspirated method to allow for flavour to stick to the chips. Flavour is applied using a flavour lance. Flavour is added in an amount of from 6% to 10% by weight of the chips.

The product is packaged in packs of typical sizes from 30 grams to 200 grams.

The rice based chip snack products are produced on a large scale with minimum product losses. The chips have excellent mouth feel, a light crisp texture, natural cooked colour and good flavour.

The invention is not limited to the embodiments hereinbefore described which may be varied in detail.

## Claims

1. A rice based snack chip product formed from a sheeted, baked and fried rice dough, the chip product comprising from 2% to 3% by weight of particulate seeds and/or grains to prevent blistering, and an amount of from 1% to 2% by weight of sugars to brown the product.

2. A snack chip product as claimed in claim 1 wherein the dough comprises pregelatinised rice flour and brown rice flour.

3. A snack chip product as claimed in claim 1 or 2 wherein the dough includes masa corn flour.

4. A snack chip product as claimed in any of claims 1 to 3 wherein the dough comprises pregelatinised rice flour, brown rice flour and masa corn flour in approximately equal quantities by weight.

5. A snack chip product as claimed in any of claims 1 to 4 wherein the sugars comprise sucrose and dextrose.

6. A snack chip product as claimed in claim 5 comprising approximately 3 parts sucrose to one part dextrose by weight.

7. A snack chip product as claimed in any of claims 1 to 6 wherein the seeds or grain are selected from the group comprising quinoa, poppy seeds, pumpkin seeds and sesame seeds.

8. A snack chip product as claimed in any of claims 1 to 7 wherein the seeds comprise sesame seeds which are present in an amount of approximately 2.5% by weight of the chip product.

9. A snack chip product as claimed in claim 8 wherein the seeds comprise black sesame seeds.

10. A process for manufacturing a rice based snack chip product comprising the steps of:-
mixing a dough comprising:-
pregelatinised rice flour
brown flour
masa corn flour
particulate grains or seeds
sucrose
dextrose
oil and
water
pre-sheeting the dough;
sheeting the dough;
cutting the sheeted dough into chip sized pieces;
cooking the dough pieces in an oven;
drying the dough pieces; and
frying the dough pieces.

11. A process as claimed in claim 10 wherein the seeds comprise sesame seeds which are present in an amount of approximately 2.4% by weight of the chip product.

12. A process as claimed in claim 11 wherein the seeds comprise black sesame seeds.

13. A process as claimed in any of claims 10 to 12 wherein the dough comprises pregelatinised rice flour, brown rice flour and masa corn flour in approximately equal quantities by weight.

14. A process as claimed in any of claims 10 to 13 wherein the dough comprises approximately 3 parts sucrose to one part dextrose by weight.
